(19) Europäisches Patentamt
European Patent Office
Office européen des brevets

(11) **EP 4 394 956 A2**

(12) **EUROPEAN PATENT APPLICATION**

(43) Date of publication:
**03.07.2024   Bulletin 2024/27**

(21) Application number: **23220713.4**

(22) Date of filing: **29.12.2023**

(51) International Patent Classification (IPC):
*H01M 8/00* (2016.01)     *H01M 8/0228* (2016.01)
*H01M 8/0276* (2016.01)     *H01M 8/0284* (2016.01)
*H01M 8/0286* (2016.01)     *H01M 8/18* (2006.01)
*H01M 8/242* (2016.01)     *H01M 8/2455* (2016.01)

(52) Cooperative Patent Classification (CPC):
**H01M 8/188; H01M 8/006; H01M 8/0228;
H01M 8/0278; H01M 8/0284; H01M 8/0286;
H01M 8/242; H01M 8/2455**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.12.2022   KR 20220190751
27.12.2023   KR 20230193716**

(71) Applicant: **Standard Energy Inc.
Yuseong-gu, Daejeon 34014 (KR)**

(72) Inventors:
- **LEE, Dong-Young
  34014 Daejeon (KR)**
- **KIM, Dong-Heun
  34014 Daejeon (KR)**

(74) Representative: **Vossius & Partner
Patentanwälte Rechtsanwälte mbB
Siebertstrasse 3
81675 München (DE)**

(54) **ADHESIVE FOR SECONDARY BATTERY**

(57)     Disclosed is an adhesive for a secondary battery. More specifically, disclosed is an adhesive for a secondary battery that replaces a gasket used when assembling a cell module of the secondary battery.

FIG. 1

EP 4 394 956 A2

**Description**

**CROSS-REFERENCE TO RELATED APPLICATION**

This application claims priority from Korean Patent Application No. 10-2022-0190751 filed on December 30, 2022 and Korean Patent Application No. 10-2023-0193716 filed on December 27, 2023 in the Korean Intellectual Property Office, the contents of which in its entirety are herein incorporated by reference.

**BACKGROUND**

**Field**

The present disclosure relates to an adhesive for a secondary battery, and more specifically, to an adhesive for a secondary battery that may replace a gasket used when assembling a cell module of the secondary battery.

**Description of Related Art**

Unlike conventional secondary batteries, a redox flow battery (RFB) has a system in which an active material in electrolyte is oxidized and reduced to charge and discharge the battery and refers to an electrochemical storage device that stores electrical energy therein in a form of chemical energy of the electrolyte. In the redox flow battery, actual electrochemical reaction occurs in a stack. RFB operates by continuously circulating the electrolyte into the stack using a fluid pump. While this redox flow battery has the advantages of long lifespan, high output, and high capacity, the RFB has space constraints and design difficulty due to the tank that stores therein the electrolyte and the fluid pump to flow the electrolyte. Accordingly, the inventors of the present disclosure developed a redox secondary battery in which the electrolyte tank and the fluid pump are absent. However, this developed redox secondary battery had low energy density and large volume.

In order to assemble a cell module of the redox secondary battery, a gasket with adhesiveness and airtightness is used to prevent electrolyte leakage in assembling elements such as a current collector, a frame, and a separator that constitute the cell module with each other.

In particular, in order to couple the separator to the frame, a scheme of applying a high pressure of 7,000 N or higher using a gasket between the frame and the separator has been applied.

However, due to a volume of the gasket itself, the volume of the cell module increases, which is disadvantageous. When using the gasket, the high pressure is required, which is disadvantageous in terms of a process. It is difficult to prevent micro-leakage due to scratches on the frame surface when using the gasket. Multiple cells should be assembled with each other at once and the assembly is inspected, resulting in difficulties in the process.

Furthermore, it is common to manufacture a gasket using a rubber resin. When such rubber resin is attached to the frame made of plastic, a difference between thermal strains of the plastic material and the rubber resin may occur. In particular, there is a problem in that the airtightness of the gasket is destroyed at low temperatures below 0°C and at high temperatures above 40°C, and there is also a problem in that the acid resistance of the gasket is weak in an acidic electrolyte solution.

Therefore, in order to solve the above limitations and problems, there is a need to develop a scheme other than the scheme using the gasket to couple the frame and the separator to each other.

**SUMMARY**

A purpose of the present disclosure is to provide an adhesive that may replace the gasket in the module of the secondary battery.

A purpose of the present disclosure is to provide a secondary battery module manufactured by attaching the frame and the seperator of a secondary battery using an adhesive for replacing a gasket, and a secondary battery including the same.

Purposes according to the present disclosure are not limited to the above-mentioned purpose. Other purposes and advantages according to the present disclosure that are not mentioned may be understood based on following descriptions, and may be more clearly understood based on embodiments according to the present disclosure. Further, it will be easily understood that the purposes and advantages according to the present disclosure may be realized using means shown in the claims or combinations thereof.

A first aspect of the present disclosure provides a secondary battery module comprising: a first current collector; a second current collector spaced from the first current collector; a separator disposed between the first current collector and the second current collector; and a frame defining a first electrode reservoir between the first current collector and the separator and defining a second electrode reservoir between the second current collector and the separator, wherein the frame and the separator are fixed to each other via an adhesive, wherein the adhesive satisfies a following condition (1):

$$\text{Condition (1): } A_i \geq 300 \text{ gf/25mm}$$

wherein in the condition (1), $A_i$ denotes an adhesive force measured based on a peeling force required to peel off the adhesive from an adhering target by 180° at a speed of 300mm/min, wherein the adhering target includes the frame and/or the separator.

In accordance with some embodiments of the secondary battery module, the adhesive further satisfies a following condition (2):

$$\text{Condition (2): } P_{(+)} \geq 0.5\text{bar, and } P_{(-)} \leq -0.5\text{bar}$$

wherein in the condition (2), $P_{(+)}$ and $P_{(-)}$ respectively mean positive and negative pressures under which gas begins to leak from the secondary battery module when the positive pressure and the negative pressure are applied respectively to the secondary battery module obtained by assembling the first current collector, the second current collector, the separator, and the frame with each other.

In accordance with some embodiments of the secondary battery module, the adhesive includes at least one of an acrylate-based adhesive, an acrylate-ester-based adhesive, an acrylate-ethylene-based adhesive, a polycarbonate-based adhesive, a polyethylene-based adhesive, an epoxy-based adhesive, and an isocyanate-based adhesive.

In accordance with some embodiments of the secondary battery module, the adhesive includes one of a solvent-type adhesive, an emulsion-type adhesive, a hot melt-type adhesive, a liquid-curable type adhesive, and a film-type adhesive, or a combination thereof.

In accordance with some embodiments of the secondary battery module, the frame includes a square-shaped hollow frame body, and a separator support protruding from the frame body inwardly into a hollow space of the frame body, wherein the frame and the separator are coupled to each other via the separator support.

In accordance with some embodiments of the secondary battery module, the separator support protrudes from the frame body inwardly in an in-plane direction of the frame into the hollow space of the frame body and is formed in a rectangular ring shape extending along an edge of the frame body.

In accordance with some embodiments of the secondary battery module, the secondary battery module further comprises a communication channel fluid-communicating the first electrode reservoir and the second electrode reservoir with each other.

In accordance with some embodiments of the secondary battery module, the communication channel is disposed outwardly of the separator support in an in-plane direction of the frame.

In accordance with some embodiments of the secondary battery module, the secondary battery module further comprises: a first adhesive member fixing the first current collector and the frame to each other; and a second adhesive member fixing the second current collector and the frame to each other.

In accordance with some embodiments of the secondary battery module, the secondary battery module may further comprise a first solid electrode disposed in the first electrode reservoir and impregnated with the first liquid electrode, a second solid electrode disposed in the second electrode reservoir and impregnated with the second liquid electrode, and the first solid electrode and the second solid electrode are disposed in the frame.

A second aspect of the present disclosure provides a secondary battery including a plurality of secondary battery modules, each module including the secondary battery module as described above.

In accordance with some embodiments of the secondary battery, the secondary battery operates by oxidation and reduction of redox couple dissolved in the electrolyte of the liquid electrode.

In accordance with some embodiments of the secondary battery, the redox couple is a vanadium redox couple.

The adhesive for the secondary battery in accordance with the present disclosure may replace the conventional gasket, thereby effectively reducing the volume of the secondary battery module, eliminating the need of the high pressure process, and not causing micro scratches on the frame surface. When the adhesive for the secondary battery in accordance with the present disclosure is used, high process efficiency may be achieved because it is easy to inspect each individual module assembly.

The adhesive for the secondary battery in accordance with the present disclosure has excellent adhesion to and airtightness between elements of the secondary battery module.

The adhesive for the secondary battery in accordance with the present disclosure may maintain stable airtightness even at high pressure.

A difference between the thermal strain of the adhesive for the secondary battery in accordance with the present disclosure and the thermal strain of the frame is small. Further, the adhesive for the secondary battery in accordance with the present disclosure has small thermal strain not only at room temperature, but also at high and low temperatures. Thus, the adhesive for the secondary battery in accordance with the present disclosure has excellent airtightness stability.

Effects of the present disclosure are not limited to the effects mentioned above, and other effects not mentioned will be clearly understood by those skilled in the art from the descriptions below.

## BRIEF DESCRIPTION OF DRAWINGS

FIG. 1 is an exploded perspective view of a secondary battery according to an embodiment of the present disclosure.

FIG. 2 is an exploded perspective view of a secondary battery according to another embodiment of the present disclosure.

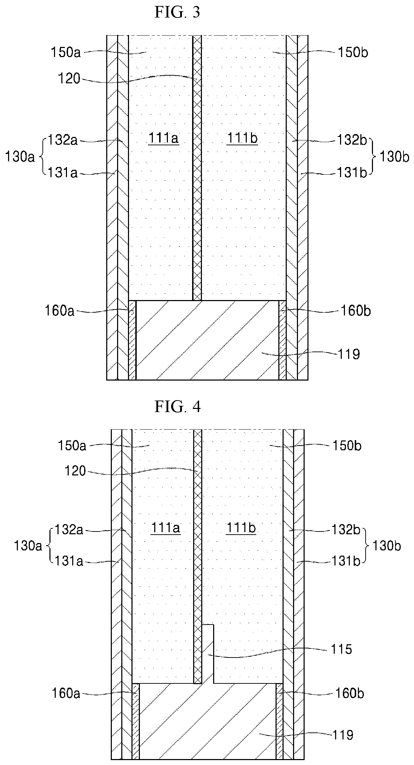

FIG. 3 is a cross-sectional view of a secondary battery module according to one embodiment of the present disclosure.

FIG. 4 is a cross-sectional view of a secondary battery module according to another embodiment of the present disclosure.

FIG. 5 is a cross-sectional view of a secondary battery module including a communication channel according to one embodiment of the present disclosure.

FIG. 6 is a cross-sectional view of a secondary battery module including a communication channel according to another embodiment of the present disclosure.

FIG. 7 is a rear view of a frame of a secondary battery module according to another embodiment of the present disclosure.

## DETAILED DESCRIPTIONS

Advantages and features of the present disclosure, and a method of achieving the advantages and features will become apparent with reference to embodiments described later in detail together with the accompanying drawings. However, an embodiment of the present disclosure is not limited to the embodiments as disclosed under, but may be implemented in various different forms. Thus, these embodiments are set forth only to make the present disclosure complete, and to completely inform the scope of the present disclosure to those of ordinary skill in the technical field to which the present disclosure belongs, and the present disclosure is only defined by the scope of the claims.

For simplicity and clarity of illustration, elements in the drawings are not necessarily drawn to scale. The same reference numbers in different drawings represent the same or similar elements, and as such perform similar functionality. Further, descriptions and details of well-known steps and elements are omitted for simplicity of the description. Furthermore, in the following detailed description of the present disclosure, numerous specific details are set forth in order to provide a thorough understanding of the present disclosure. However, it will be understood that the present disclosure may be practiced without these specific details. In other instances, well-known methods, procedures, components, and circuits have not been described in detail so as not to unnecessarily obscure aspects of the present disclosure. Examples of various embodiments are illustrated and described further below. It will be understood that the description herein is not intended to limit the claims to the specific embodiments described. On the contrary, it is intended to cover alternatives, modifications, and equivalents as may be included within the spirit and scope of the present disclosure as defined by the appended claims.

A shape, a size, a ratio, an angle, a number, etc. disclosed in the drawings for illustrating embodiments of the present disclosure are illustrative, and an embodiment of the present disclosure is not limited thereto.

The terminology used herein is directed to the purpose of describing particular embodiments only and is not intended to be limiting of the present disclosure. As used herein, the singular constitutes "a" and "an" are intended to include the plural constitutes as well, unless the context clearly indicates otherwise. It will be further understood that the terms "comprise", "comprising", "include", and "including" when used in this specification, specify the presence of the stated features, integers, operations, elements, and/or components, but do not preclude the presence or addition of one or more other features, integers, operations, elements, components, and/or portions thereof. As used herein, the term "and/or" includes any and all combinations of one or more of associated listed items. Expression such as "at least one of" when preceding a list of elements may modify the entire list of elements and may not modify the individual elements of the list. In interpretation of numerical values, an error or tolerance therein may occur even when there is no explicit description thereof.

It will also be understood that when a first element or layer is referred to as being present "on" a second element or layer, the first element may be disposed directly on the second element or may be disposed indirectly on the second element with a third element or layer being disposed between the first and second elements or layers. It will also be understood that when a first element or layer is referred to as being present "under" a second element or layer, the first element may be disposed directly under the second element or may be disposed indirectly under the second element with a third element or layer being disposed between the first and second elements or layers.

It will be understood that when an element or layer is referred to as being "connected to", or "coupled to" another element or layer, it may be directly connected to or coupled to another element or layer, or one or more intervening elements or layers therebetween may be present. In addition, it will also be understood that when an element or layer is referred to as being "between" two elements or layers, it may be the only element or layer between the two elements or layers, or one or more intervening elements or layers therebetween may also be present.

In addition, it will also be understood that when an element or layer is referred to as being "between" two elements or layers, it may be the only element or layer between the two elements or layers, or one or more intervening elements or layers therebetween may also be present.

Further, as used herein, when a layer, film, region, plate, or the like is disposed "on" or "on a top" of another layer, film, region, plate, or the like, the former may directly contact the latter or still another layer, film, region, plate, or the like may be disposed between the former and the latter. As used herein, when a layer, film, region, plate, or the like is directly disposed "on" or "on a top" of another layer, film, region, plate, or the like, the former directly contacts the latter and still another layer, film, region, plate, or the like is not disposed between the former and the latter. Further, as used herein, when a layer, film, region, plate, or the like is disposed "below" or "under" another layer, film, region, plate, or the like, the former may directly contact the latter or still another layer, film, region, plate, or the like may be disposed between the former and the latter. As used herein, when a layer, film, region, plate, or the like is directly disposed "below" or "under" another layer, film, region, plate, or the like, the former directly contacts the latter and still another layer, film, region, plate, or the like is not disposed between the former and the latter.

In descriptions of temporal relationships, for example, temporal precedent relationships between two events such as "after", "subsequent to", "before", etc., another event may occur therebetween unless "directly after", "directly subsequent" or "directly before" is not indicated.

When a certain embodiment may be implemented differently, a function or an operation specified in a specific block may occur in a different order from an order specified in a flowchart. For example, two blocks in succession may be actually performed substantially concurrently, or the two blocks may be performed in a reverse order depending on a function or operation involved.

It will be understood that, although the terms "first", "second", "third", and so on may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described under could be termed a second element, component, region, layer or section, without departing from the spirit and scope of the present disclosure.

Spatially relative terms, such as "beneath," "below," "lower," "under," "above," "upper," and the like, may be used herein for ease of illustration to illustrate one element or feature's relationship to another element or feature as illustrated in the figures. It will be understood that the spatially relative terms are intended to encompass different orientations of the device in use or in operation, in addition to the orientation depicted in the figures. For example, when the device in the drawings may be turned over, elements described as "below" or "beneath" or "under" other elements or features would then be oriented "above" the other elements or features. Thus, the example terms "below" and "under" may encompass both an orientation of above and below. The device may be otherwise oriented, for example, rotated 90 degrees or at other orientations, and the spatially relative descriptors used herein should be interpreted accordingly.

The features of the various embodiments of the present disclosure may be partially or entirely combined with each other, and may be technically associated with each other or operate with each other. The embodiments may be implemented independently of each other and may be implemented together in an association relationship.

In interpreting a numerical value, the value is interpreted as including an error range unless there is no separate explicit description thereof.

Unless otherwise defined, all terms including technical and scientific terms used herein have the same meaning as commonly understood by one of ordinary skill in the art to which this inventive concept belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, "embodiments," "examples," "aspects, and the like should not be construed such that any aspect or design as described is superior to or advantageous over other aspects or designs.

Further, the term 'or' means 'inclusive or' rather than 'exclusive or'. That is, unless otherwise stated or clear from the context, the expression that 'x uses a or b' means any one of natural inclusive permutations.

The terms used in the description below have been selected as being general and universal in the related technical field. However, there may be other terms than the terms depending on the development and/or change of technology, convention, preference of technicians, etc. Therefore, the terms used in the description below should not be understood as limiting technical ideas, but should be understood as examples of the terms for illustrating embodiments.

Further, in a specific case, a term may be arbitrarily selected by the applicant, and in this case, the detailed meaning thereof will be described in a corresponding description section. Therefore, the terms used in the description below should be understood based on not simply the name of the terms, but the meaning of the terms and the contents throughout the Detailed Descriptions.

Unless there is a specific limitation in the present disclosure, "adhesive" and "adhesive member" may be interpreted to have the same meaning. The adhesive itself attached to a specific part of the secondary battery module may be referred to as the adhesive member.

Hereinafter, the present disclosure will be described with reference to drawings for illustrating the secondary battery according to embodiments of the present disclosure.

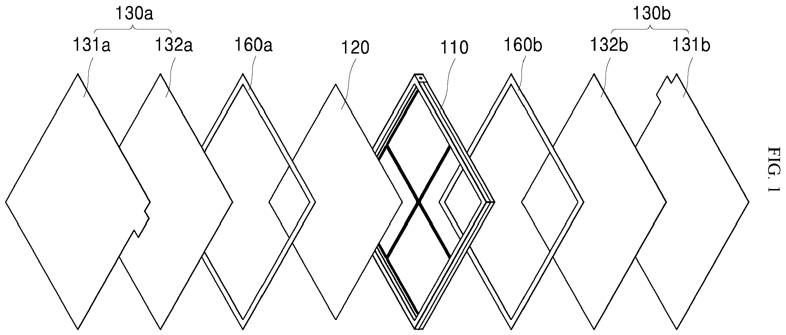

Referring to FIG.1, the secondary battery module according to an embodiment of the present disclosure may include a first current collector 130a, a second current collector 130b spaced apart from the first current collector 130a, a separator 120 disposed between the first current collector 130a and the second current collector 130b, a frame 110 defining a first electrode reservoir 111a and a second electrode reservoir 111b, a first liquid electrode which is accommodated in the first electrode reservoir 111a and where a first half reaction occurs, and a second liquid electrode which is accommodated in the second electrode reservoir 111b and where a second half reaction occurs, a first adhesive member 160a bonding the first current collector 130a and the frame 110 to each other, and a second adhesive member 160b bonding the second current collector 130b and the frame 110 to each other. In this regard, the secondary battery may further include a communication channel 112 communicating the first electrode reservoir 111a and the second electrode reservoir 111b with each other.

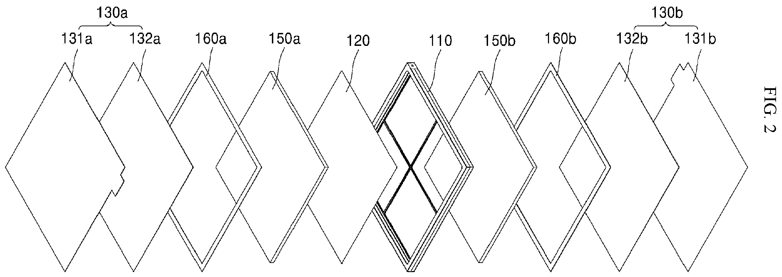

Referring to FIG. 2, the secondary battery module according to another embodiment of the present disclosure may further include a first solid electrode 150a disposed in the first electrode reservoir 111a and impregnated with the first liquid electrode, a second solid electrode 150b disposed in the second electrode reservoir 111b and impregnated with the second liquid electrode. When the secondary battery module includes the solid electrodes, electrons can move more actively during charging and discharging of the secondary battery, thus, the redox reaction can be performed more smoothly, thereby improving the performance of the redox secondary battery.

Hereinafter, the present disclosure is described in more detail with reference to Fig. 1 and Fig. 2.

The first solid electrode 150a is impregnated with the first liquid electrode and disposed in the first electrode reservoir 111a. The first solid electrode 150a is surrounded with the frame 110, the first current collector 130a, and the separator 120. The first solid electrode 150a includes a carbon-based material such as carbon or graphite felt, carbon cloth, carbon black, graphite powder, or graphene. The first solid electrode 150a is in close contact with the first current collector 130a and the separator 120.

The second solid electrode 150b is impregnated with the second liquid electrode and disposed in the second electrode reservoir 111b. The second solid electrode 150b is surrounded with the frame 110, the second current collector 130b, and the separator 120. The second solid electrode 150b includes a carbon-based material such as carbon or graphite felt, carbon cloth, carbon black, graphite powder, or graphene. The second solid electrode 150b is disposed inwardly of the second adhesive member 160b in the in-plane direction of the frame 110.

When the first solid electrode 150a and the second solid electrode 150b are present, the first solid electrode 150a and the second solid electrode 150b are disposed inside the frame 110.

According to one embodiment of the present disclosure, in order to facilitate the fixing of the frame 110 and the separator 120 to each other, a separator support 115 may be formed on the frame 110 of the present disclosure, and an adhesive may be applied to the separator support 115.

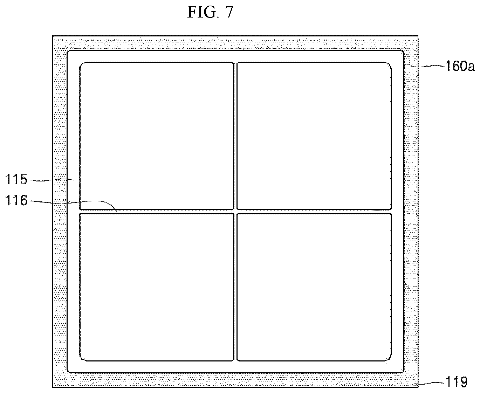

Referring to FIG. 7, specifically, the frame 110 according to an embodiment of the present disclosure may include a square-shaped hollow frame body 119, the separator support 115 protruding inwardly into a hollow space of the frame body 119 from the frame body 119 and coupled to the separator 120, and a frame reinforcement portion 116 disposed in the hollow space of the frame body 119 to prevent the frame body 119 from being deformed. In this regard, the frame 110 and the separator 120 may be couped to each other via the separator support 115.

According to one embodiment of the present disclosure, the separator support protrudes inwardly (toward a center) in an in-plane direction of the frame into the hollow space of the frame body and is formed in a rectangular ring shape extending along an edge of the frame body.

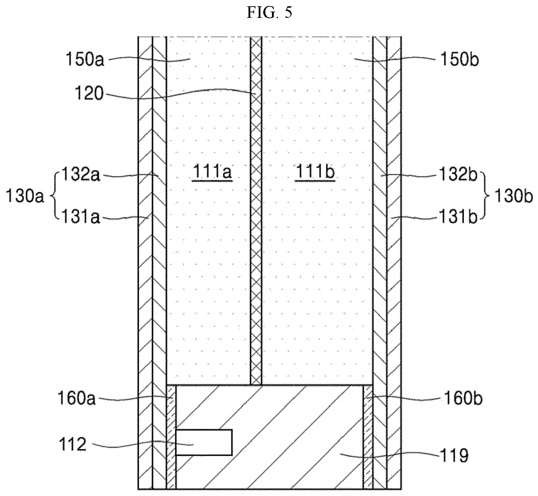

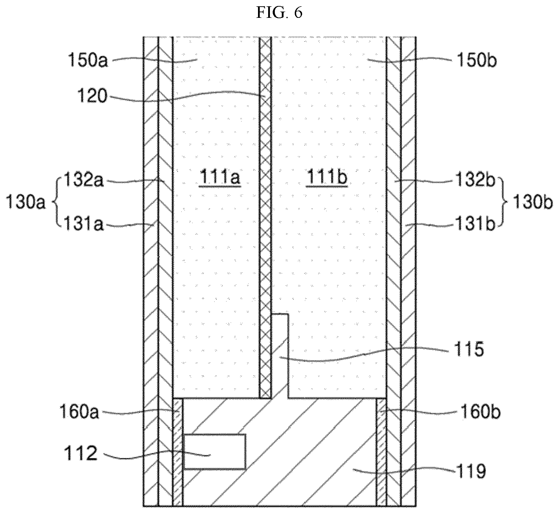

Referring to FIG. 5 and FIG. 6, according to one embodiment of the present disclosure, a communication channel 112 communicating with the first electrode receiver 111a and the second electrode receiver 111b with each other may be further included. The communication channel 112 may be disposed outwardly of the separator support in the in-plane direction of the frame.

According to one embodiment of the present disclosure, the secondary battery module may further include a first adhesive member 160a for fixing the first current collector 130a and the frame 110 to each other and a second adhesive member 160b for fixing the second current collector 130b and the frame 110 to each other.

The first adhesive member 160a and the second adhesive member 160b are not particularly limited as long as they are used in the technical field, and gaskets, adhesives, and pressure-sensitive adhesives can be used. For example, when the first adhesive member 160a and the second adhesive member 160b are adhesive, any type of adhesive for attaching the separator and frame can be also used in the present disclosure. However, when attaching a frame and a current collector, a relatively higher adhesion force is required compared to when attaching a frame and a separator. Therefore, the adhesive for attaching the separator and frame can be further mixed with an adhesion promoter, curing agent, etc.

The frame 110 together with the first adhesive member 160a and the second adhesive member 160b may define the communication channel 112.

According to one embodiment of the present disclosure, the first current collector 130a may include a first metal current collector 131a made of metal and electrically connected to a bus bar, and a first carbon current collector 132a disposed between the first metal current collector 131a and the frame 110.

According to one embodiment of the present disclosure, the second current collector 130b may include a second metal current collector 131b made of metal and electrically connected to the bus bar, and a second carbon current disposed collector 132b disposed between the second metal current collector 131b and the frame 110.

According to one embodiment of the present disclosure, the first liquid electrode is an electrolyte in which an anode redox couple is dissolved. The anode redox couple may include at least one of vanadium (V), zinc (Zn), bromine (Br), chromium (Cr), manganese (Mn), titanium (Ti), iron (Fe), cerium (Ce), and cobalt (Co). For example, the anode redox couple is a $V^{2+}/V^{3+}$ redox couple. The first liquid electrode may be an acidic aqueous solution as a solution which conducts electric current via ionization. Preferably, the acidic aqueous solution includes sulfuric acid. In this embodiment, the first liquid electrode may be prepared by dissolving $VOSO_4$ (vanadylsulfate) or $V_2O_5$ (vanadium pentoxide) in $H_2SO_4$ aqueous solution.

In the first liquid electrode, the first half reaction occurs. The first half reaction is as follows:

$$V^{2+} \longleftrightarrow V^{3+} + e^-$$

where $\rightarrow$ represents a discharge reaction direction and $\leftarrow$ represents a charge reaction direction.

In a discharging operation, vanadium divalent ions are oxidized to vanadium trivalent ions. In a charging operation, vanadium trivalent ions are reduced to vanadium divalent ions.

The first liquid electrode is surrounded with the frame 110, the first current collector 130a, and the separator 120. The first liquid electrode is not leaked in an in-plane direction between the first current collector 130a and the frame 110 due to the first adhesive member 160a. The first liquid electrode is accommodated in the first electrode reservoir 111a.

The first liquid electrode is electrically connected to the first current collector 130a. In a discharging operation, electrons migrate therefrom to the first current collector 130a. In a charging operation, electrons from the first current collector 130a migrate to the first liquid electrode. The first liquid electrode is in contact with the separator 120, such that hydrogen cations (protons) migrate through the separator 120.

The second liquid electrode is an electrolyte in which a cathode redox couple is dissolved. The cathode redox couple may include at least one of vanadium (V), zinc (Zn), bromine (Br), chromium (Cr), manganese (Mn), titanium (Ti), iron (Fe), cerium (Ce), and cobalt (Co). In this embodiment, the cathode redox couple is a $V^{4+}/V^{5+}$ redox couple. The second liquid electrode may be an acidic aqueous solution as a solution which conducts electric current via ionization. Preferably, the acidic aqueous solution includes sulfuric acid. In this embodiment, the second liquid electrode may be prepared by dissolving $VOSO_4$ (vanadylsulfate) or $V_2O_5$ (vanadium pentoxide) in $H_2SO_4$ aqueous solution.

In the second liquid electrode, the second half reaction occurs. The second half reaction is as follows:

$$V^{5+} + e^- \longleftrightarrow V^{4+}$$

where $\rightarrow$ represents a discharge reaction direction and $\leftarrow$ represents a charge reaction direction.

In a discharging operation, vanadium pentavalent ions are reduced to vanadium tetravalent ions. In a charging operation, vanadium tetravalent ions are oxidized to vanadium pentavalent ions.

The second liquid electrode is surrounded with the frame 110, the second current collector 130b, and the separator 120. The second liquid electrode is not leaked in an in-plane direction between the second current collector 130b and the frame 110 due to the second adhesive member. The second liquid electrode is accommodated in the second electrode reservoir 111b.

The second liquid electrode is electrically connected to the second current collector 130b. Thu, in the charging operation, electrons migrate therefrom to the second current collector 130b. In the discharging operation, electrons from the second current collector 130b migrate to the second liquid electrode.

The second liquid electrode is in contact with the separator 120, such that hydrogen cations (protons) migrate through the separator 120.

As described above, the first liquid electrode and the second liquid electrode include the same ingredient. The first liquid electrode and the second liquid electrode are made of the same electrolyte containing vanadium ions. Hereinafter, the first liquid electrode and the second liquid electrode are collectively referred to as a liquid electrode.

The separator 120 is disposed in the hollow space of the frame 110 so as to separate the first liquid electrode and the second liquid electrode from each other and to allow hydrogen cations (protons) to migrate between the first liquid electrode and the second liquid electrode therethrough. The separator 120 is disposed in the hollow space of the frame 110 so as to distinguish the first electrode reservoir 111a and the second electrode reservoir 111b from each other.

The separator 120 is disposed between the first liquid electrode and the second liquid electrode. The separator 120 is disposed between the first current collector 130a and the second current collector 130b. The separator 120 is disposed inwardly of the first adhesive member 160a and the second adhesive member 160b in the in-plane direction of the frame 110. An edge of the separator 120 contacts the frame 110.

In the discharging operation, the hydrogen cations migrate from the first liquid electrode to the second liquid electrode through the separator 120. In the charging operation, the hydrogen cations migrate from the second liquid electrode to the first liquid electrode through the separator 120.

A material of the separator 120 is not limited particularly, and may include perfluorinated ionomer, partially fluorinated polymer, or non-fluorinated hydrocarbons. The separator 120 may be made of or include Nafion®, Flemion®, NEOSEPTA-F®, or Gore Select®. However, an embodiment of the present disclosure is not necessarily limited thereto.

The separator 120 may include perfluorinated ionomer, partially fluorinated polymer, or non-fluorinated hydrocarbons. The separator 120 may be made of or include Nafion®, Flemion®, NEOSEPTA-F®, or Gore Select®. However, an embodiment of the present disclosure is not necessarily limited thereto.

According to one embodiment, in order to exhibit excellent mechanical strength and acid resistance, the separator 120 may be a separator comprising a polybenzimidazole-based compound containing at least one polybenzimidazole monomer selected from ab-PBI (Poly(2,5-benzimidazole)), oPBI (Poly[2,2'-(4,4'- oxybis(1,4-phenylene))-5,5'-bibenzimidazole), m-PBI (meta-polybenzimidazole), p-PBI (para-polybenzimidazole), s-PBI (sulfonated polybenzimidazole), f-PBI (fluorine-containing polybenzimidazole), 2OH-PBI (Dihydroxy polybenzimidazole), PIPBI (Phenylindane-polybenzimidazole), and PBI-OO (poly[(1-(4,4'-diphenylether)-5-oxybenzimidazole)-benzimidazole]).

For example, the polybenzimidazole-based separator according to the present disclosure may be manufactured by applying a polybenzimidazole-based solution in which polybenzimidazole is dissolved in an organic solvent on a substrate film made of polyethylene terephthalate (PET) to form a liquid film and converting the liquid film to a solid film and then removing the solid film from the substrate film to obtain the separator. Alternatively, the polybenzimidazole-based separator according to the present disclosure may be manufactured by impregnating a porous membrane made of polyethylene (PE) and/or polypropylene (PP) with the polybenzimidazole-based solution to obtain the separator. The organic solvent is one selected from N,N-dimethylacetamide (DMAc), dimethylformamide (DMF), dimethyl sulfoxide (DMSO), and N-methyl-2-pyrrolidone (NMP).

The secondary battery module according to the present disclosure may include a first current collector 130a, a second current collector 130b spaced apart from the first current collector 130a, a separator 120 disposed between the first current collector 130a and the second current collector 130b, a frame 110 defining a first electrode reservoir 111a and a second electrode reservoir 111b, a first liquid electrode which is accommodated in the first electrode reservoir 111a and where a first half reaction occurs, and a second liquid electrode which is accommodated in the second electrode reservoir 111b and where a second half reaction occurs, and the frame 110 and the separator 120 may be fixed to each other via an adhesive.

The adhesive may be used without any limitation as long as it satisfies the airtightness comparable to that achieved by using the conventional gasket in coupling the frame and the separator to each other, and has high adhesiveness to ensure the stability of the battery.

In addition, an attachment material such as the existing gasket contain chloroform and xylene-based materials, and thus has the disadvantage of having a negative impact on the human body and the environment. Thus, when using such an attachment material, a cost of building an environmental facility incurs.

In addition, when attaching the separator to the frame, an adhesive as conventionally known may be used instead of a pressure sensitive adhesive. In this case, however, the adhesive as conventionally known does not have stretchability, so that when the operating environment condition of the secondary battery module changes, the separator may be torn or broken. In addition, the adhesive as conventionally known has a very short curing time compared to the pressure sensitive adhesive. Thus, when using the adhesive as conventionally known, it may be difficult to implement an assembling process of the secondary battery module. Further, in the assembling process of the secondary battery module, reworkability may be poor.

Taking the above situation into consideration, the inventors of the present disclosure have developed a novel adhesive that exhibits superior adhesive properties compared to the existing gasket or adhesive and is suitable for attaching the frame and the separator to each other in the secondary battery module.

According to one embodiment of the present disclosure, the adhesive satisfies a following condition (1):

$$\text{Condition (1): } A_i \geq 300 \text{ gf/25mm}$$

wherein in the condition (1), $A_i$ denotes an adhesive force measured based on a peeling force required to peel off the adhesive from the adhering target by 180° at a speed of 300mm/min. The adhesive force may be 300 gf/25mm or greater, for example, 700 gf/25mm or greater, for example, 1,000 gf/25mm or greater, for example, 1,200 gf/25mm or greater, for example, 1,500 gf/25mm or greater, for example, 2,000 gf/25mm or greater. There is no particular upper limit in terms of increasing the adhesive force. However, for example, the adhesive force may be 2,500 gf/25mm or smaller.

In accordance with the present disclosure, the adhesive member is applied to bond the separator and the frame to each other. Thus, excellent airtightness may be achieved only when the adhesive member exhibits sufficient adhesive strength relative to the frame which may be made of various materials.

In accordance with the present disclosure, the frame may be a metal frame or a plastic frame, and according to one embodiment, the frame may be a plastic frame. The plastic used to form the plastic frame may be a styrene-based plastic. Specific types of the plastic may include polystyrene (PS), high impact polystyrene (HIPS), styrene acrylonitrile (AS), and acrylonitrile butadiene styrene (ABS). Preferably, the plastic may be acrylonitrile butadiene styrene (ABS).

Particularly, the adhesive in accordance with the present disclosure has a small difference between the thermal strains at room temperature and high and low temperatures when being attached to a plastic frame, and thus, has high resistance to temperature impact. In particular, the airtightness may be maintained at low temperatures of 0°C or lower, preferably, a low temperature of -10°C, and at high temperatures of 40°C or higher, preferably, high temperatures of 50°C because the thermal strain is significantly small even at low temperatures of 0°C or lower, preferably, a low temperature of -10°C, and at high temperatures of 40°C or higher, preferably, high temperatures of 50°C.

In one embodiment, the secondary battery module in accordance with the present disclosure may include an acidic aqueous solution in which a redox couple is dissolved as a liquid electrode, as will be described later. Therefore, the adhesive in accordance with the present disclosure is in contact with the acidic aqueous solution for a long time, and has excellent acid resistance, thereby ensuring airtightness and stability.

According to one embodiment of the present disclosure, the adhesive in accordance with the present disclosure may have excellent airtightness to improve the current efficiency of the battery, and thus, may specifically satisfy a following condition (2):

$$\text{Condition (2): } P_{(+)} \geq 0.5 \text{bar, and } P_{(-)} \leq -0.5 \text{bar}$$

wherein in the condition (2), $P_{(+)}$ and $P_{(-)}$ respectively mean positive and negative pressures under which gas begins to leak from the secondary battery module when the positive pressure and the negative pressure are applied respectively to the secondary battery module obtained by assembling the first current collector, the frame, the second current collector, and the separator with each other. As an absolute value of each of $P_{(+)}$ and $P_{(-)}$ is larger, more excellent airtightness is maintained even at higher pressures.

In particular, the secondary battery module in accordance with the present disclosure operates using the solid electrode impregnated with the liquid electrode received in the electrode reservoir of each secondary battery module, without using the electrolyte tank and the fluid pump. Thus, a very high pressure is applied to the element within the secondary battery module. It is required to have pressure resistance against positive pressure of at least 0.5 bar or higher. In addition, during the electrolyte injection process in the manufacturing process of secondary battery, the electrode reservoir is brought into a vacuum state and a negative pressure is applied thereto in order to inject the electrolyte thereto. Thus, it is necessary to maintain the pressure resistance of the secondary battery even under such negative pressure. It is required to have pressure resistance against negative pressure of at least -0.5 bar or lower.

Therefore, in order to ensure high operation stability of the secondary battery, it is desirable to satisfy the above condition (2). From the above viewpoint, it is required that the positive pressures under which the gas leakage occurs are 0.5 bar or higer, and preferably 1 bar or higher, more preferably, 2 bar or higher and, most preferably, 3 bar or higher In addition, it is required that the negative pressures under which the gas leakage occurs are -0.5 bar or lower, and preferably -1 bar.

In accordance with the present disclosure, a condition for satisfying the pressure resistance is as follows: a certain or higher pressure is initially applied to the cell module of the secondary battery (this is referred to as a reference pressure) and, then, the cell module is left for 30 days. Then, the pressure is measured. In this regard, an absolute of (the reference pressure - the measured pressure)/(the reference pressure) x 100 % should be smaller than 50%.

In addition, the pressure resistance of the adhesive of the present disclosure should be satisfied not only at room temperature but also at high and low temperatures, for example, low temperatures of 0°C or lower, preferably a low temperature of -10°C and high temperatures of 40°C or higher, preferably, a high temperature of 50°C.

The adhesive of the present disclosure is used as an adhesive member to attach the separator and the frame to each other. Thus, the first and second electrolyte solutions of the secondary battery module of the present disclosure are separated from each other via the separator. If a short circuit occurs in a unit cell during the process of repeating charging and discharging of the secondary battery after the electrolyte is supplied to the secondary battery module, the short circuit may lead to safety accidents such as overheating of the secondary battery and fire. Therefore, in accordance with the present disclosure, it is important to ensure that the adhesive attached to the separator and the frame does not cause the short circuit even when the adhesive is immersed in the first or second electrolyte solution of the secondary battery.

Any adhesive that satisfies the characteristics as described above may be used as the adhesive for the adhesive member without limitations. Specifically, each of the first adhesive member and the second adhesive member may include at least one of an acrylate-based adhesive, an acrylate-ester-based adhesive, an acrylate-ethylene-based adhesive, a polycarbonate-based adhesive, a polyethylene-based adhesive, an epoxy-based adhesive and an isocyanate-based adhesive. It is preferable that each of the first adhesive member and the second adhesive member includes an acrylate-ester adhesive. However, an embodiment of the present disclosure is not necessarily limited thereto. However, in order to improve resistance to temperature impact and acid resistance, it is preferable that each of the first adhesive member and the second adhesive member does not include an adhesive that includes rubber-based resin as a base resin. The "A-based adhesive" means that the adhesive includes a A-based resin as a base resin.

There is no particular limitation on a scheme of applying the adhesive. Specifically, the adhesive may include one of a solvent-type adhesive, an emulsion-type adhesive, a hot melt-type adhesive, a liquid-curable type adhesive, and a film-type adhesive, or a combination thereof.

Preferably, the adhesive may include the solvent-based adhesive. In a specific example, an acrylic resin may be mixed with a solvent to produce a solution and then the solution may be applied to an adherend and may be dried. In this way, the adhesive as the solvent-based adhesive may be applied to the adherend. The solvent is not particularly limited as long as it is used in the present technical field. The type of the solvent may be adjusted depending on a selected type of the resin. Examples of the solvent may include acetate-based solvents such as ethyl acetate and butyl acetate; aromatic solvents such as benzene, toluene, and xylene; ketone solvents such as acetone, methyl ethyl ketone, etc.; aliphatic hydrocarbon solvents such as n-Hexane, n-Haptane, and cyclohexane; alcohol solvents such as methanol, ethanol, and isopropanol. The above listed solvents may be used alone or in combination with each other.

In another example, when the adhesive includes the film-type adhesive, the adhesive solution is applied to a carrier film such as an OPP (oriented polypropylene) film to prepare an adhesive double-sided tape which in turn is attached to edges of the frame and the separator and then pressed. The double-sided tape may be adhered to the edges of the frame and the separator and may be punched. In this regard, for ease of the application of the adhesive of the present disclosure, it is desirable for the frame to include a separator support.

A thickness of the adhesive may be appropriately adjusted. From the viewpoint of minimizing a volume of the secondary battery module while ensuring sufficient adhesive strength, the thickness of the adhesive may be, for example, in a range of 1 to 500 $\mu$m, for example, 50 to 300 $\mu$m. However, an embodiment of an embodiment of the present disclosure is not necessarily limited thereto.

A secondary battery according to another aspect of the present disclosure may include a plurality of secondary battery modules, each according to one aspect of the present disclosure. For example, when assembling a plurality of secondary battery modules with a plurality of frames, a plurality of first current collectors, and a plurality of second current collectors, the plurality of first current collectors are electrically connected to each other via a bus bar (not shown), such that the secondary battery modules are connected to each other in a parallel manner. In this way, the secondary battery may be manufactured.

Hereinafter, the present disclosure will be described in more detail by way of examples. However, following examples are set forth only to describe the present disclosure by way of example, and the present disclosure is not limited to the following examples.

[Preparation Example 1 - Preparation of adhesive]

100 g of a solvent-type adhesive was prepared by mixing 70 g of solvent with 30 g of acrylic acid copolymer.

The acrylic acid copolymer was a copolymer of 2-propenoic acid, ethenyl acetate, and 2-ethylhexyl 2-propenoate (Cas No. 26634-78-6).

The solvent was a mixed solvent of 33 g of toluene, 7.5 g of n-haxane, 22 g of ethyl acetate, and 7.5 g of methanol.

[Preparation Example 2 - Preparation of separator]

m-PBI was added to dimethyl acetamide (DMAC), and was dissolved therein with stirring at a temperature of 160°C and atmospheric pressure for 24 hours to prepare a PBI solution with a solubility of 12% by weight. Then, a PE film (thickness: 20 $\mu$m) was impregnated in the PBI solution and then dried with hot air at a temperature of 50°C for 2 minutes to obtain a separator with a thickness of 27 $\mu$m.

[Preparation Example 3 - Manufacturing of cell module]

As shown in FIG. 7, a square frame made of ABS (thickness: 15 mm, size: 150 mm $\times$ 150 mm) was prepared, wherein the frame has a hollow frame body and a separator support (width : 4 mm) protruding from an inner wall of the frame body (see the structure of FIG. 7). The solvent-based adhesive prepared in Preparation Example 1 was applied to the separator support of the frame, and then the separator prepared in Preparation Example 2 was placed and adhered thereon.

Each of two current collectors was manufactured by stacking a carbon current collector (graphite composite, thickness: 0.2 mm) and a metal current collector (aluminum foil, thickness: 0.2 mm) on top of each other. The two current collectors were used as the first current collector and the second current collector, respectively. The first solid electrode and the first current collector as prepared above are stacked in this order on one surface of the ABS frame to which the separator has been adhered. The second solid electrode and the second current collector as prepared above were stacked on and attached to the other surface of the frame made of ABS. At this time, when attaching the first and second current collectors to the frame, each of the carbon current collector of the first current collector and the carbon current collector of the second current collector was disposed between the solid electrode and the frame. In this way, the cell module including a first electrolyte reservoir and a second electrode electrolyte reservoir was manufactured. Then, V$^{3.5+}$ electrolyte solution (manufactured by Standard Energy corporation) at a concentration of 1.7M was supplied to each of the first and second electrode electrolyte reservoir.

[Experimental example]

(1) Adhesive force measurement

The adhesive prepared in Preparation Example 1 above was applied to one of both opposing surfaces of an OPP (oriented poly-propylene) film and was dried for 4 hours. Then, an ABS frame (transverse size 24 $\times$ longitudinal size 300 mm) was attached to the adhesive on one of the both opposing surfaces of the OPP (oriented poly-propylene) film. Then. the adhesive force was measured on a peeling force required to peel away the adhesive from the frame at 180° at a speed of 300 mm/min using UTM (Universal Testing Machine) equipment, and the measured adhesive force was 1110 gf/25mm.

This confirms that the adhesive as prepared in Preparation Example 1 achieves the adhesive force of 1100 gf/25mm greater than 1000 gf/25mm as an adhesive force that the existing gasket exhibits relative to the frame.

(2) Attachment environment experiment

The (+) terminal and the (-) terminal of the 'FLUKE-101 multimeter' equipment were connected to the metal current collector of the first current collector and the metal current collector of the second current collector, respectively of the cell module manufactured in Preparation Example 3. Then, the cell module was left in a constant temperature chamber environment of each of 22°C (room temperature condition), 0°C (low temperature condition), and 50°C (high temperature condition) for 3 hours. If the adhesion state between the separator and the attachment surface of the frame is poor, or if the separator is broken or damaged due to the above conditions, a short circuit may occur between the two electrodes (the first electrode and the second electrode), so by checking whether a short circuit has occurred, the attachment state of the separator can be estimated.

Then, whether a short circuit occurred was checked. When the short circuit occurs in the 'FLUKE-101 multimeter' equipment, a "beep" alarm sounds. Thus, whether the short circuit has occurred based on the alarm sound. The results are shown in Table 1 below.

In addition, after the cell module was left for 3 hours, we visually observed whether the separator and the frame were attached to each other in an initial state. If the separator and the frame were attached to each other in the initial state, this is determined as "pass" and the results are shown in Table 1 below.

[Table 1]

| Temperature conditions | Whether short circuit occurs | Attachment state |
|---|---|---|
| 22°C (room temperature conditions) | No | Pass |
| 0°C (low temperature conditions) | No | Pass |
| 50°C (high temperature conditions) | No | Pass |

If the separator is properly attached, the first electrode and the second electrode can be separated, so a short circuit does not occur even if current flows. However, if the separator is not properly attached, a short circuit occurs because current passes directly between the first and second electrodes.

As shown in Table 1 above, it was confirmed that when the separator was attached to the frame using the adhesive of the present disclosure, no short circuit occurred, and the separator and the frame were attached to each other in the initial state, even after the cell module was left for 3 hours at the room temperature, the low temperature, and the high temperature.

**Claims**

1. A secondary battery module comprising:

   a first current collector;
   a second current collector spaced from the first current collector;
   a separator disposed between the first current collector and the second current collector; and
   a frame defining a first electrode reservoir between the first current collector and the separator and defining a second electrode reservoir between the second current collector and the separator,
   wherein the frame and the separator are fixed to each other via an adhesive,
   wherein the adhesive satisfies a following condition (1):

$$\text{Condition (1): } A_i \geq 300 \text{ gf/25mm}$$

   wherein in the condition (1), $A_i$ denotes an adhesive force measured based on a peeling force required to peel off the adhesive from an adhering target by 180° at a speed of 300mm/min, wherein the adhering target includes the frame and/or the separator.

2. The secondary battery module of claim 1, wherein the adhesive further satisfies a following condition (2):

$$\text{Condition (2): } P_{(+)} \geq 0.5 \text{bar, and } P_{(-)} \leq -0.5 \text{bar}$$

   wherein in the condition (2), $P_{(+)}$ and $P_{(-)}$ respectively mean positive and negative pressures under which gas begins to leak from the secondary battery module when the positive pressure and the negative pressure are applied respectively to the secondary battery module obtained by assembling the first current collector, the second current collector, the separator, and the frame with each other.

3. The secondary battery module of claim 1, or 2, wherein the adhesive includes at least one of an acrylate-based adhesive, an acrylate-ester-based adhesive, an acrylate-ethylene-based adhesive, a polycarbonate-based adhesive, a polyethylene-based adhesive, an epoxy-based adhesive, and an isocyanate-based adhesive.

4. The secondary battery module of claim 1, 2, or 3, wherein the adhesive includes one of a solvent-type adhesive, an emulsion-type adhesive, a hot melt-type adhesive, a liquid-curable type adhesive, and a film-type adhesive, or a combination thereof.

5. The secondary battery module of any one of claims 1 to 4, wherein the frame includes a square-shaped hollow frame body, and a separator support protruding from the frame body inwardly into a hollow space of the frame body, wherein the frame and the separator are coupled to each other via the separator support.

6. The secondary battery module of claim 5, wherein the separator support protrudes from the frame body inwardly in an in-plane direction of the frame into the hollow space of the frame body and is formed in a rectangular ring shape extending along an edge of the frame body.

7. The secondary battery module of any one of claims 1 to 6, further comprising a communication channel fluid-communicating the first electrode reservoir and the second electrode reservoir with each other.

8. The secondary battery module of claim 7, wherein the communication channel is disposed outwardly of the separator support in an in-plane direction of the frame.

9. The secondary battery module of any one of claims 1 to 8, further comprising:

   a first adhesive member fixing the first current collector and the frame to each other; and
   a second adhesive member fixing the second current collector and the frame to each other.

10. The secondary battery module of any one of claims 1 to 9, wherein the secondary battery module furthers comprise a first solid electrode disposed in the first electrode reservoir and impregnated with the first liquid electrode, a second solid electrode disposed in the second electrode reservoir and impregnated with the second liquid electrode, and the first solid electrode and the second solid electrode are disposed in the frame.

11. A secondary battery including a plurality of secondary battery modules, each module including the secondary battery module of any one of claims 1 to 10.

12. The secondary battery of claim 11, wherein the secondary battery operates by oxidation and reduction of redox couple dissolved in the electrolyte of the liquid electrode.

13. The secondary battery of claim 12, wherein the redox couple is a vanadium redox couple.

FIG. 1

FIG. 2

FIG. 3

150a — 150b

120 —

132a — 111a 111b — 132b
130a { 131a — — 131b } 130b

160a — 160b

— 119

FIG. 4

150a — 150b

120 —

132a — 111a 111b — 132b
130a { 131a — — 131b } 130b

— 115

160a — 160b

— 119

FIG. 5

FIG. 6

FIG. 7

**EP 4 394 956 A2**

**Patent documents cited in the description**

- KR 1020220190751
- KR 1020230193716